# EUROPÄISCHE PATENTSCHRIFT

(11) **EP 1 239 206 B1**
(45) Veröffentlichungstag und Bekanntmachung des Hinweises auf die Patenterteilung: **17.12.2003**
(21) Anmeldenummer: 02001534.3
(22) Anmeldetag: 23.01.2002
(51) Int. Cl.: F16L 23/028, F16L 23/032

(54) **Klemmflansch-Verbindung**
Joint with clamping flanges
Liaison à brides serrantes

(30) Priorität: 01.03.2001 DE 20103593 U
(43) Veröffentlichungstag der Anmeldung: 11.09.2002
(73) Patentinhaber: TUCHENHAGEN GmbH, 21514 Büchen (DE)
(72) Erfinder: Coura, Herbert, 21514 Büchen (DE)

(56) Entgegenhaltungen:
- WO-A-98/38446
- DE-U- 29 807 302
- FR-A- 703 116
- FR-A- 1 206 231
- US-A- 3 515 416

## Beschreibung

### TECHNISCHES GEBIET

Die Erfindung betrifft eine Klemmflansch-Verbindung nach dem Oberbegriff des Anspruchs 1.

Herstellerspezifische, nicht genormte Klemmflansche im Sinne des Anmeldungsgegenstandes haben in ihrem Verbindungsbereich näherungsweise jene Form, wie sie auch Klemmstutzen zum Anschweißen gemäß **DIN 32676** aufweisen. Die Verbindung der genormten Klemmstutzen miteinander erfolgt beispielsweise über eine ebenfalls aus dieser Norm ersichtliche Klammer. Während der normgemäße Klemmstutzen auf seiner dem jeweils anderen Klemmstutzen zugewandten Stirnfläche eine nutförmige Ausnehmung aufweist, in der ein Dichtring eingesetzt wird, dienen die Klemmflansche des Anmeldungsgegenstandes in erster Linie der formund kraftschlüssigen Verbindung von Rohrleitungs- und Armaturenteilen miteinander; die Abdichtung dieser Teile gegeneinander erfolgt unmittelbar im Bereich ihrer Innenwandungen. Klemmflansch-Ausgestaltungen und Klemmflansch-Verbindungen der in Rede stehenden Art sind beispielsweise in den Firmendruckschriften der Otto Tuchenhagen GmbH & Co KG (**D1**) bzw. der Tuchenhagen GmbH (**D2**) dargestellt ((**D1**): Tuchenhagen OT-VARIVENT, Prospekt-Nr. 825; (**D2**): VARIVENT-Ventile, 020/0d-99; Tuchenhagen-ECOVENT Ventile, 038/0d-99; VARIVENT-In-Line Kontroll- und Messtechnik, 035/2d-99).

### STAND DER TECHNIK

Die vorstehend in (**D1**) erwähnten Klemmflansche werden bislang beispielsweise mit sogenannten Halbringen, wie sie aus der DE-U-78 05 012 bekannt sind, miteinander verbunden. Diese Halbringe, vorzugsweise als Edelstahl-Feingussteil oder als Gesenkschmiedeteil hergestellt, werden beiderseits miteinander verschraubt. Sie bilden innenseits eine umlaufende keilförmige Nut, wobei die Nutflanken durch radiales Zusammenführen der Halbringe die komplementären Teilungsflächen der Klemmflansche zwangsläufig in axialer Richtung aufeinander pressen.

Eine (**D2**) zu entnehmende andere Form der Halbring-Ausgestaltung zur form- und kraftschlüssigen Verbindung der in Rede stehenden Klemmflansche ist in der **DE-U-88 05 919** beschrieben. Bei dieser Ausgestaltung sind die Halbringe an ihrem einen Ende über wenigstens ein Gelenk und am anderen Ende über eine verstellbare, einerseits angelenkte Spannverbindung miteinander verbunden. Dabei bilden die Halbringe in ihrer Spannlage zusammen einen um einen beiderseits allein aus Toleranzerfordernissen notwendigen Spalt reduzierten Umschlingungswinkel von annähernd 360 Grad. Die Gelenke und ein Spannteil sind jeweils mit kurzem Abstand von dem Ende des Halbringes angeordnet, wobei das Gelenk in einem mit dem Halbring stoffschlüssig verbundenen Verbindungsteil Aufnahme findet und das Spannteil unmittelbar mit dem Halbring stoffschlüssig verbunden ist. Bis auf das Doppelgelenk entspricht diese auch als Klappring-Verbindung bezeichnete bekannte Vorrichtung in ihrem grundsätzlichen Aufbau der Klammer, wie sie in der DIN 32676 als beispielhaft dargestelltes Verbindungsmittel für die Klemmstutzen dargestellt ist.

Die bekannten Verbindungsmittel für Klemmflansche in Form miteinander verschraubter (sogenannte Spannring-Verbindung) oder über Gelenke einerseits und Schraubenverbindungen andererseits (sogenannte Klappring-Verbindung) miteinander verbundener Halbringe weisen u.a. den Nachteil auf, dass sie nur für relativ niedrige Innendrücke der miteinander zu verbindenden Rohrleitungs- und Armaturenteile geeignet sind. Darüber hinaus sind diese bekannten Klemmflansch-Verbindungen dann problematisch, wenn sie gelöst werden und sich in den miteinander verbundenen Rohrleitungs- und Armaturenteilen noch unter Druck anstehendes Medium befindet. Bei versehentlichem Öffnen einer derartigen Verbindung bleibt letztere zunächst so lange dicht, bis der Form- und Kraftschluss der beiden miteinander verbundenen Halbringe abrupt aufgehoben wird. Das Lösen der Klemmflansch-Verbindung sieht dabei allerdings keine Zwischenstellung vor, inder die voneinander geringfügig gelösten Klemmflansche zunächst so lange arretiert sind, bis das unter Druck anstehende Medium abgeströmt ist. Das Demontieren einer derartigen Klemmflansch-Verbindung erfordert daher die sorgfältige Einhaltung einschlägig bekannter Sicherheitsvorschriften, damit denkbare Gefahrenpotentiale im Umgang mit derartigen handhabungsfreundlichen und an sich äußerst praktikablen Verbindungen minimiert werden. Aus den vorgenannten Gründen werden die vorgenannten Klemmflansch-Verbindungen in der Regel überall dort nicht oder nur mit Einschränkungen eingesetzt, wo die sog. Druckbehälter-Verordnung zur Anwendung kommt.

In der **US-A-3 515 416** ist eine Klemmflansch-Verbindung der gattungsgemäßen Art beschrieben, wobei allerdings die mit dieser Verbindung zusammengehaltenen Klemmflansche außenseits jeweils eine rechtwinklige Kontur aufweisen. Diese aus zwei Klemmstücken und zwei Klemmgegenstücken gebildete Klemmflansch-Verbindung gestattet zwar ein gefahrloses Entspannen der beiden Schraubenverbindungen, die diese Verbindung zusammenhält, allerdings sind lediglich die beiden Klemmstücke und die beiden Klemmgegenstücke, jeweils untereinander, geführt und zwischen den Klemmstücken und den Klemmgegenstücken ist keine Führung vorgesehen. Die jeweilige Führung ist dabei nicht besonders wirksam ausgeführt, da ein Klemmstück eine Nase und das andere Klemmstück eine hierzu korrespondierende Ausnehmung besitzt. Die gleiche formschlüssige Verbindung findet sich an den beiden komplementären Klemmgegenstücken. Diese, bezogen auf die Längsachse der Klemmflansch-Verbindung, punktsymmetrische Anordnung der formschlüssigen Verbindung besitzt daher nur eine mäßige Führungsquatität, und eine nicht hinreichende Zentrierung und Führung findet allenfalls mittels der beiden Schrauben statt, die über Durchgangsbohrungen durch die Klemmstücke und Klemmgegenstücke hindurchgreifen.

Aufgabe der vorliegenden Erfindung ist es, eine Klemmflansch-Verbindung der eingangs beschriebenen Art zu schaffen, die ein gefahrloses Lösen einer derartigen Verbindung auch bei innenseits unter Druck anstehendem Medium erlaubt und bei der sich die Klemmstücke und die Klemmgegenstücke hinreichend gegenseitig führen.

### ERFINDUNG

Die Aufgabe wird durch eine Klemmflansch-Verbindung mit den Merkmalen des Anspruchs 1 gelöst. Vorteilhafte Ausgestaltungen der vorgeschlagenen Klemmflansch-Verbindung sind Gegenstand der Unteransprüche.

Die Klemmstücke und die Klemmgegenstücke teilen die umlaufende keilförmige Nut in einer Teilungsebene senkrecht zu einer Längsachse der Klemmflansch-Verbindung. Die Nut wird dabei gemäß einer vorteilhaften Ausführungsform symmetrisch geteilt. Dadurch können die Klemmstücke und die Klemmgegenstücke mittels der zwischen diesen vorgesehenen Führung in Richtung der Längsachse der Klemmflansch-Verbindung begrenzt auseinandergeschoben werden, ohne dass die noch miteinander verschraubten Klemmstücke und -gegenstücke vollständig getrennt sind. Nach Lösen der Klemmstücke und der -gegenstücke voneinander können sich auch die Klemmflansche um ein entsprechendes axiales Maß voneinander entfernen, so dass ggf. unter Druck anstehendes Medium dann durch den gebildeten Abstandsringspalt und anschließend über einen jeweils zwischen den Klemmstücken einerseits oder zwischen den Klemmgegenstücken andererseits gebildeten, radial orientierten Spalt in die Umgebung abströmen kann. Im Gegensatz zu den bekannten Klemmflansch-Verbindungen, die ein form- und kraftschlüssiges Gegeneinanderspannen der Klemmflansche durch radiales Zusammenführen der Halbringe bewerkstelligen, erfolgt mittels der erfindungsgemäßen Klemmflansch-Verbindung die form- und kraftschlüssige Verbindung der Klemmflansche durch axiales Annähern der Klemmstücke und -gegenstücke, d.h. in Richtung der Längsachse der Klemmflansch-Verbindung.

Um die Klemmstücke und -gegenstücke hinreichend in Richtung der Längsachse der Klemmflansch-Verbindung zu führen, ist vorgesehen, dass an der den Klemmgegenstücken zugewandten Stirnseite des jeweiligen Klemmstückes ein innen- und außenseits mit je einer zylindrischen Führungsfläche versehener ringförmiger Vorsprung ausgebildet ist, der in eine komplementäre ringförmige Nut im Klemmgegenstück eingreift. Der ringförmige Vorsprung stellt in Verbindung mit der komplementären ringförmigen Nut darüber hinaus sicher, dass sich die Klemmstücke und -gegenstücke nicht in radialer Richtung gegeneinander verschieben können. Die Länge der zylindrischen Führungsflächen ist so bemessen, dass ein hinreichend großes axiales Entfernen der Klemmflansche voneinander möglich ist, ohne dass die Führung zwischen den Klemmstücken und den - gegenstücken aufgehoben wird. Dabei ist in jedem Falle die erforderliche Arretierung der Klemmflansch-Verbindung gegen vollständiges axiales Lösen durch eine vorgesehene Schraubverbindung über eine hinreichende Einschraubtiefe der Schrauben im jeweiligen Klemmstück gewährleistet.

Die vorgeschlagene Klemmflansch-Verbindung wird besonders einfach und bietet dabei auch signifikante Handhabungsvorteile, wenn, wie dies eine weitere Ausführungsform der Erfindung vorsieht, jeweils zwei in ihren jeweiligen Abmessungen kongruente Klemmstücke sowie -gegenstücke vorgesehen sind, wobei jedes Paar Klemmstücke und -gegenstücke in Umfangsrichtung zwischen sich radial orientierte Spalte bilden. Die Spalte werden dabei um 90 Grad zueinander versetzt angeordnet. Durch die vorgesehenen Spalte kann ggf. unter Druck anstehendes Medium nach außen entweichen, wenn die Klemmflansche nach einem begrenzten Lösen der Schraubverbindungen um ein entsprechendes axiales Maß voneinander entfernt wurden.

Durch die paarweise Anordnung von Klemmstücken und -gegenstücken, von denen jedes Stück jeweils annähernd einen Umschlingungswinkel von 180 Grad umfasst, und durch das Versetzen der zwischen den Klemmstücken und -gegenstücken gebildeten Spalte um 90 Grad zueinander ist es möglich, Schraubverbindungen in einer Umfangsteilung von 4 x 90 Grad zwischen den Spalten vorzusehen. Dadurch überlappen die Klemmstücke und -gegenstücke miteinander, es werden über den Umfang der Klemmflansch-Verbindung vier gleichmäßig verteilte Spalte gebildet und die gesamte Klemmflansch-Verbindung ist in sich außerordentlich stabil.

### KURZBESCHREIBUNG DER ZEICHNUNGEN

Ein Ausführungsbeispiel der Erfindung ist in der Zeichnung dargestellt und wird nachfolgend kurz beschrieben. Es zeigen
- **Figur 1**: einen Mittefschnitt durch die Klemmflansch-Verbindung gemäß der Erfindung und
- **Figur 2**: die Klemmflansch-Verbindung gemäß Figur 1 in perspektivischer Darstellung.

### BEZUGSZEICHENLISTE DER VERWENDETEN ABKÜRZUNGEN

- 1: erstes Klemmstück
- 1*: zweites Klemmstück
- 1a: erste Nutflanke
- 1b: erste radiale Nutbegrenzung
- 1c: erste Durchgangsöffnung
- 1d: ringförmiger Vorsprung
- 1d': innere zylindr. Führungsfläche
- 1d'': äußere zylindr. Führungsfläche
- 1e: Gewindebohrung
- 1f: Anschrägung
- 2: erstes Klemmgegenstück
- 2*: zweites Klemmgegenstück
- 2a: zweite Nutflanke
- 2b: zweite radiale Nutbegrenzung
- 2c: zweite Durchgangsöffnung
- 2d: ringförmige Nut
- 2e: Durchgangsbohrung
- 3: Schraube
- 4: Scheibe
- 5: erster Spalt
- 6: zweiter Spalt
- A: Längsachse
- E: Teilungsebene
- F: Führung
- N: keilförmige Nut
- S: Schraubverbindungen
- V: Klemmflansch-Verbindung

### DETAILLIERTE BESCHREIBUNG

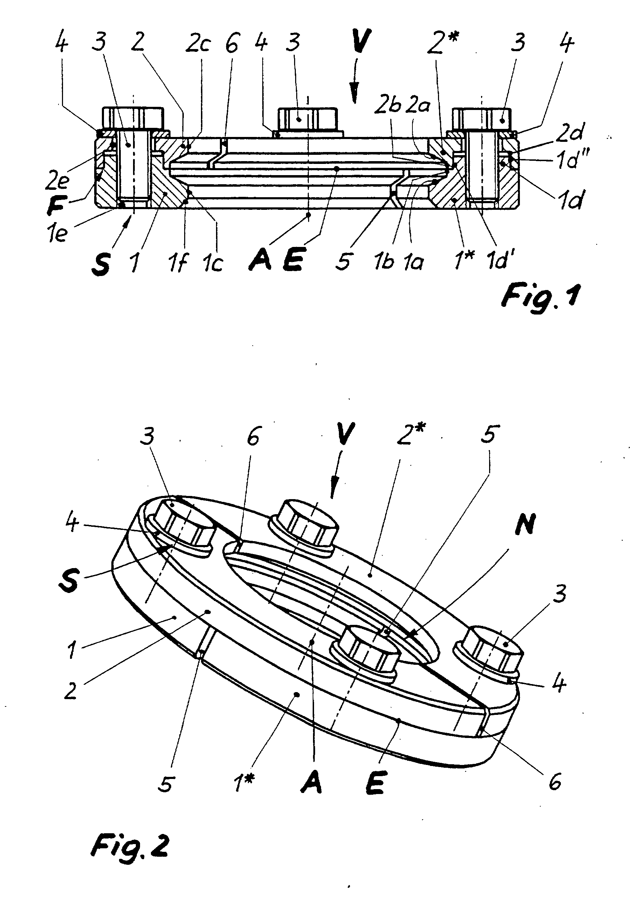

Die Klemmflansch-Verbindung V (**Figuren 1** und **2**) besteht gemäß einer vorteilhaften Ausgestaltung aus jeweils zwei in ihren jeweiligen Abmessungen kongruenten Klemmstücken 1 und 1*, die in Umfangsrichtung zwischen sich einen radial orientierten Spalt 5 bilden. Jedes Klemmstück 1, 1 * umfasst dabei annähemd einen Umschlingungswinkel von 180 Grad. Sie korrespondieren mit einem komplementären Klemmgegenstück 2 und 2*, die ihrerseits jeweils kongruente Abmessungen besitzen und zusammen ebenfalls einen Umschlingungswinkel von annähernd 2 x 180 Grad bilden. Die einzelnen Merkmale der Klemmstücke 1 und 1 * sowie der Klemmgegenstücke 2 und 2* sind nachfolgend nur mit Bezug auf das erste Klemmstück 1 und das erste Klemmgegenstück 2 definiert, wobei diese Merkmale gleichermaßen uneingeschränkt auf das zweite Klemmstück 1 * und das zweite Klemmgegenstück 2* übertragbar sind. An der dem Klemmgegenstück 2, 2* zugewandten Stirnseite des Klemmstückes 1, 1 * ist ein ringförmiger Vorsprung 1 d ausgebildet, der innenseits mit einer inneren zylindrischen Führungsfläche 1 d' und außenseits mit einer äußeren zylindrischen Führungsfläche 1d" versehen ist. Der ringförmige Vorsprung 1 d greift in eine komplementäre ringförmige Nut 2d im Klemmgegenstück 2, 2* ein und bildet somit eine Führung F zwischen den Klemmstücken 1, 1* und den Klemmgegenstücken 2, 2* in Richtung einer Längsachse A der Klemmflansch-Verbindung V.

Erstes und zweites Klemmgegenstück 2 bzw. 2* bilden wiederum in Umfangsrichtung zwischen sich einen radial orientierten Spalt 6, wobei die Spalte 5 und 6 um 90 Grad zueinander versetzt angeordnet sind (**Figur 2**). Die Klemmstücke 1, 1 * und die Klemmgegenstücke 2, 2* formen innenseits zwischen sich eine umlaufende keilförmige Nut N aus, die auf der Seite der Klemmstücke 1, 1* von einer ersten Nutflanke 1a und einer sich daran anschließenden ersten radialen Nutbegrenzung 1b und auf der Seite der Klemmgegenstücke 2, 2* von einer zweiten Nutflanke 2a und einer sich daran anschließenden zweiten radialen Nutbegrenzung 2b begrenzt wird. Dabei teilen die Klemmstücke 1, 1 * und die Klemmgegenstücke 2, 2* die umlaufende keilförmige Nut N vorzugsweise symmetrisch in einer Teilungsebene E senkrecht zur Längsachse A der Klemmflansch-Verbindung V.

Die Klemmstücke 1, 1 * und die Klemmgegenstücke 2, 2* sind in einer Umfangsteilung von 4 x 90 Grad (**Figur 2**) zwischen den Spalten 5, 6 jeweils über eine Schraubverbindung S miteinander verbunden. Im Ausführungsbeispiel sind Schrauben 3 dieser Schraubverbindung S als Sechskant-Kopfschrauben ausgebildet, die jeweils über eine Durchgangsbohrung 2e durch die Klemmgegenstücke 2, 2* hindurchgeführt und in jeweils einer Gewindebohrung 1e im jeweiligen Klemmstück 1, 1 * eingeschraubt sind. Unter jedem Schraubenkopf wird zweckmäßigerweise eine Scheibe 4 angeordnet. Das erste Klemmstück 1 bildet zusammen mit dem zweiten Klemmstück 1 * innenseits eine erste Durchgangsöffnung'1c aus, die mit einer entsprechenden zweiten Durchgangsöffnung 2c, gebildet innenseits zwischen dem ersten Klemmgegenstück 2 und dem zweiten Klemmgegenstück 2*, korrespondiert. Die erste Durchgangsöffnung 1c ist an ihrem dem Klemmgegenstück 2, 2* abgewandten Ende zweckmäßigerweise mit einer Anschrägung 1f versehen, die sicherstellt, dass die Klemmflansch-Verbindung V beispielsweise so nah wie möglich an einem kurzen Klemmflansch-Stutzen, beispielsweise angeschweißt an einem Behälter, angeordnet werden kann, ohne dass es in diesem Bereich mit der dort üblicherweise vorliegenden Kehlnaht zu Beeinträchtigungen kommt. Aus der Positionierung der Anschrägung 1f in Verbindung mit der Positionierung der Schrauben 3 wird ersichtlich, wie die Klemmflansch-Verbindung V gegenüber einem derartigen Klemmflansch-Stutzen anzuordnen ist.

Die vorgeschlagene Ausgestaltung der Klemmflansch-Verbindung stellt sicher, dass überall dort, wo derzeit Spannring-Verbindungen gemäß **DE-U-78 05 012** oder Klappring-Verbindungen gemäß **DE-U-88 05 919** vorgesehen sind, ein Austausch dieser Verbindungen gegen die Klemmflansch-Verbindung gemäß der Erfindung möglich ist.

Zur Realisierung der Führung F zwischen den Klemmstücken 1, 1 * und den Klemmgegenstücken 2, 2* kann auch eine zur vorstehend vorgeschlagenen Ausführungform spiegelbildliche Form vorgesehen werden. In diesem Fall befindet sich ein ringförmiger Vorsprung mit innen- und außenseits angeordneten zylindrischen Führungsflächen an den Klemmgegenstücken 2, 2*, und er greift in eine komplementäre ringförmige Nut im Klemmstück 1, 1 * ein.

Auch die vorstehend beschriebene Schraubverbindung S ist beispielhaft gewählt. Wenn es die räumlichen Verhältnisse zulassen, kann auch eine Schraubverbindung mit Durchgangsschrauben vorgesehen werden. Bei Einschraublösungen ist die Gewindebohrung auch in den Klemmgegenstücken 2, 2* anzuordnen, insbesondere dann, wenn ein ringförmiger Vorsprung dort angeordnet ist. Die Schraubverbindungen in Sinne der Erfindung umfassen auch Lösungen mit sog. Stiftschrauben, die auf unterschiedlichste Weise in den Klemmstücken 1, 1 * bzw. in den Klemmgegenstücken 2, 2* befestigt sein können.

## Patentansprüche

1. Klemmflansch-Verbindung
• mit wenigstens einem ersten Klemmstück (1 ) und einem zweiten Klemmstück (1*), die den einen Klemmflansch komplementär und annähernd vollumfänglich umschlingen,
• mit wenigstens einem ersten Klemmgegenstück (2) und einem zweiten Klemmgegenstück (2*), die den anderen Klemmflansch komplementär und annähernd vollumfänglich umschlingen,
• mit einer zwischen den Klemmstücken (1, 1*) und Klemmgegenstücken (2, 2*) innenseits gebildeten, umlaufenden Nut (N), die die Klemmflansche an ihren Nutflanken (1a, 2a) komplementär aufnimmt,
• wobei die Klemmstücke (1, 1*) und die Klemmgegenstücke (2, 2*) die Nut (N) in einer Teilungsebene (E) senkrecht zu einer Längsachse (A) der Klemmflansch-Verbindung (V) teilen,
• mit einer in der Längsachse (A) der Klemmflansch-Verbindung (V) orientierten Führung (F) zwischen den Klemmstücken (1, 1*) und den Klemmgegenstücken (2, 2*) und
• mit Schraubverbindungen (S), die die Klemmstücke (1, 1*) einerseits und die Klemmgegenstücke (2, 2*) andererseits miteinander verbinden,
**dadurch gekennzeichnet,**
• **dass** sich die Nut (N), in radialer Richtung gesehen, nach außen keilförmig verjüngt,
• und **dass** an der den Klemmgegenstücken (2, 2*) zugewandten Stimseite des jeweiligen Klemmstückes (1, 1*) ein innen- und außenseits mit je einer zylindrischen Führungsfläche (1d', 1d") versehener ringförmiger Vorsprung (1d) ausgebildet ist, der in eine komplementäre ringförmige Nut (2d) im Klemmgegenstück (2, 2*) eingreift.

2. Klemmflansch-Verbindung nach Anspruch 1, **dadurch gekennzeichnet, dass** jeweils zwei in ihren jeweiligen Abmessungen kongruente Klemmstücke (1) und (1*) sowie Klemmgegenstücke (2) und (2*) vorgesehen sind, dass jedes Paar Klemmstücke (1, 1 *) und Klemmgegenstücke (2, 2*) in Umfangsrichtung zwischen sich radial orientierte Spalte (5, 6) bilden, und dass die Spalte (5, 6) um 90 Grad zueinander versetzt angeordnet sind.

3. Klemmflansch-Verbindung nach Anspruch 2, **dadurch gekennzeichnet, dass** die Klemmstücke (1, 1*) und die Klemmgegenstücke (2, 2*) in einer Umfangsteilung von 4 x 90 Grad zwischen den Spalten (5, 6) jeweils über eine Schraubverbindung (S), bestehend aus einer Schraube (3), einer Scheibe (4), einer Gewindebohrung (1e) und einer Durchgangsbohrung (2e), miteinander verbunden sind.

4. Klemmflansch-Verbindung nach einem der Ansprüche 1 bis 3, **dadurch gekennzeichnet, dass** die Teilungsebene (E) die Nut (N) symmetrisch teilt.

## Claims

1. Clamping flange connection
• comprising at least a first clamping part (1) and a second clamping part (1*), which embrace the one clamping flange complementary and almost on the full circumference;
• comprising at least a first clamping counterpart (2) and a second clamping counterpart (2*), which embrace the other clamping flange complementary and almost on the full circumference,
• comprising a circumferential groove (N) formed on the inside between the clamping parts (1, 1*) and the clamping counterparts (2, 2*), which complementary receives the clamping flanges at its groove flanks (1a, 2a) ,
• wherein the clamping parts (1, 1*) and the clamping counterparts (2, 2*) divide the groove (N) in a plane of division (E) perpendicularly to a longitudinal axis (A) of the clamping flange connection (V),
• comprising a guide (F) oriented in a longitudinal axis (A) of the clamping flange connection (V) between the clamping parts (1, 1*) and the clamping counterparts ( 2 , 2 * ) , and
• comprising screw connections (S) connecting the clamping parts (1, 1*) on the on side and the clamping counterparts (2, 2*) on the other side with each other,
**characterised in that**
• the groove (N) tapers in wedge-shape, viewed in the radial direction, towards the outside,
• and that at the front side of each clamping part (1, 1*) directed towards the clamping counterparts (2, 2*) an annular projection (1d) provided with a cylindrical guiding surface (1d', 1d'') each on the inside as well as the outside is formed, which engages into a complementary annular groove (2d) in the clamping counterpart (2, 2*).

2. Clamping flange connection according to claim 1, **characterised in that** two clamping parts (1) and (1*) as well as clamping counterparts (2) and (2*) each congruent in their respective dimensions are provided, that each pair of clamping parts (1, 1*) and clamping counterparts (2, 2*) form in circumferential direction between them radially oriented splits (5, 6), and that the splits (5, 6) are arranged mutually displaced by 90 degrees.

3. Clamping flange connection according to claim 2, **characterised in that** the clamping parts (1, 1*) and the clamping counterparts (2, 2*) are connected with each other in a circumferential division of 4 x 90 degrees between the splits (5, 6) each through a screw connection (S) consisting of a screw, a washer (4), a threaded hole (le) and a through-hole (2e).

4. Clamping flange connection according to one of the claims 1 to 3, **characterised in that** the plane of division (E) symmetrically divides the groove (N).

## Revendications

1. Assemblage formant bride de serrage
avec au moins une première pièce de serrage (1) et une deuxième pièce de serrage (1*), qui enroulent une première bride de serrage de façon complémentaire et sur presque toute la circonférence,
avec au moins une première contre-pièce de serrage (2) et une deuxième contre-pièce de serrage (2*), qui entourent l'autre pièce de serrage de façon complémentaire et sur presque toute la circonférence complète,
avec une gorge (N) formée du côté intérieur entre les pièces de serrage (1, 1*) et les contre-pièces de serrage (2, 2*) et s'étendant sur toute la circonférence et qui loge de façon complémentaire les brides de serrage sur leurs flancs (1a, 2a),
les pièces de serrage (1, 1*) et les contre-pièces de serrage (2, 2*) divisant la gorge (N) dans un plan de division (E) perpendiculairement à un axe longitudinal (A) de l'assemblage formant bride de serrage (V),
avec un guidage (F) orienté dans l'axe longitudinal (A) de l'assemblage formant bride de serrage (V) entre les pièces de serrage (1, 1 *) et les contre-pièces de serrage (2, 2*) et
avec des visseries (S), qui assemblent ensemble les pièces de serrage (1, 1 *) d'une part avec les contre-pièces de serrage (2, 2*) d'autre part,
**caractérisé en ce que**
la gorge (N), vue en direction radiale, se rétrécit vers l'extérieur de façon conique,
et **en ce que**, sur la face frontale de chaque pièce de serrage (1, 1*) tournée vers les contre-pièces de serrage (2, 2*) est conçu un épaulement de forme circulaire (1d) à l'extérieur et à l'intérieur prévu avec respectivement une surface de guidage (1d', 1D"), épaulement qui s'engrène dans une gorge (2d) complémentaire de forme annulaire située dans la contre-pièce de serrage (2, 2*).

2. Assemblage formant bride de serrage selon la revendication 1, **caractérisé en ce que** sont prévues respectivement deux pièces de serrage (1) et (1*) ainsi que deux contre-pièces de serrage (2) et (2*) congruentes dans leurs dimensions respectives, **en ce que** chaque paire de pièces de serrage (1, 1 *) et de contre-pièces de serrage (2, 2*) forme en direction circonférentielle des fentes (5, 6) orientées de façon radiale entre elles et **en ce que** les fentes (5, 6) sont disposées de façon décalée de 90 degrés l'une par rapport à l'autre.

3. Assemblage formant bride de serrage selon la revendication 2, **caractérisé en ce que** les pièces de serrage (1, 1*) et les contre-pièces de serrage (2, 2*) sont assemblées les unes aux autres dans un pas circonférentiel de 4 x 90 degrés entre les fentes (5, 6) chacune par une visserie (S), composée d'une vis (3), d'une rondelle (4), d'un filetage (le) et d'un orifice de forage (2e).

4. Assemblage formant bride de serrage selon l'une quelconque des revendications 1 à 3, **caractérisé en ce que** le plan de division (E) divise la gorge (N) de façon symétrique.
